Europäisches Patentamt

European Patent Office

Office européen des brevets

(19)

(11) Veröffentlichungsnummer : **0 139 967**
**B1**

(12) EUROPÄISCHE PATENTSCHRIFT

(45) Veröffentlichungstag der Patentschrift :
11.11.87

(51) Int. Cl.⁴ : **G 01 N 29/04, G 02 B 21/24**

(21) Anmeldenummer : **84109859.3**

(22) Anmeldetag : **18.08.84**

(54) Verfahren und Vorrichtung zur Durchführung mehrerer einander ergänzender mikroskopischer Untersuchungen.

(30) Priorität : 30.09.83 DE 3335480

(43) Veröffentlichungstag der Anmeldung :
08.05.85 Patentblatt·85/19

(45) Bekanntmachung des Hinweises auf die Patenterteilung : 11.11.87 Patentblatt 87/46

(84) Benannte Vertragsstaaten :
CH DE FR GB LI NL

(56) Entgegenhaltungen :
US-A- 2 914 952
US-A- 3 790 281
US-A- 4 011 748
US-A- 4 190 313
PATENT ABSTRACTS OF JAPAN, Band 7, Nr. 23, (P-
171)(1168), 29. Januar 1983

(73) Patentinhaber : ERNST LEITZ WETZLAR GMBH
Ernst-Leitz-Strasse 30 Postfach 20 20
D-6330 Wetzlar 1 (DE)

(72) Erfinder : Muth, Karl-Heinz
Ostendstrasse 26
D-6304 Lollar (DE)

## Beschreibung

Die Erfindung betrifft ein Verfahren zur Durchführung mehrerer einander ergänzender licht- und akustomiskroskopischer Untersuchungen an einem Objekt entsprechend dem ersten Teil des Anspruchs 1, sowie eine Vorrichtung zur Durchführung des Verfahrens entsprechend dem ersten Teil des Anspruchs 1.

Aus der US-PS 4 011 748 sind ein Verfahren und eine Vorrichtung zur akustischen und optischen Mikroskopie bekannt (siehe ersten Teil des Anspruchs 1). Das Verfahren ermöglicht sowohl die gleichzeitige Aufzeichnung eines akustischen Bildes eines Objektes als auch die visuelle Beobachtung desselben mittels einer optischen Linse abgebildeten Objektdetails. Das entsprechende Mikroskop besitzt ein optisches und ein akustisches Linsensystem, welche Licht und Schallwellen in derselben Brennebene fokussieren und die vom Objekt reflektierten oder durchgelassenen, modulierten Lichtstrahlen oder akustischen Wellen in elektrische Signale umwandeln. Diese werden sodann auf dem Anzeigeschirm einer Kathodenstrahlröhre als mikroskopisches Bild des Objekts dargestellt. Das Objekt wird abgetastet und dabei in einem Rastermuster durch die Brennebene bewegt, welches mit dem der Kathodenstrahlröhre synchronisiert ist. Es ist auch vorgesehen, das Objekt unbewegt zu lassen. In diesem Fall muß das gesamte Mikroskop im Rastermuster mit synchronem Antrieb der Kathodenstrahlröhre bewegt werden. Durch Verwendung eines Strahlenteilers kann das auf den Kathodenstrahlröhren dargestellte Objekt auch visuell wie mit einem herkömmlichen Lichtmikroskop beobachtet werden. Während einer Aufzeichnung auf den Anzeigeschirmen der Kathodenstrahlröhren ist eine derartige direkte visuelle Beobachtung wegen des entweder im Rastermuster bewegten Objektes oder Gesamtsystems nicht möglich.

Aus der US-PS 3 790 281 ist ein kombiniertes System zur gleichzeitigen akustisch-optischen Untersuchung eines unbewegten Objektes unter Verwendung eines abtastenden Laserstrahls sowie von Schallwellen bekannt. Wegen der Anwendung unfokussierter Wellen sind mit dieser Vorrichtung keine nennenswerten Vergrößerungen möglich, und außerdem ist eine mit dem Objekt verbundene, teilweise reflektierende und elastisch deformierbare Zwischenfläche zur Erzeugung eines speziellen Wellenmusters erforderlich. Durch optische Abtastung desselben entsteht sodann ein akustisches Bild, eine akustische Abtastbewegung findet nicht statt.

In der japanischen GM-Anmeldung Sho-56-22 172 wird eine mikroskopische Einrichtung beschrieben, welche ein optisches und ein akustisches Mikroskop umfaßt, die fest auf einer Grundplatte montiert sind. Zwischen beiden sind Umschaltmittel vorgesehen, so daß nacheinander optische und akustisch-mikroskopische Beobachtungen durchführbar sind. Eine gleichzeitige Untersuchung mittels des auf der gleichen Objektseite angeordneten optischen und akustischen Objektivs ist mit dieser Einrichtung nicht möglich, da bei der akustischen Bilderzeugung eine Abtastbewegung erforderlich ist, bei welcher das Objekt diese Bewegung ausführt.

Aus der japanischen Offenlegungsschrift 57-176 016 ist ein Akustomikroskop mit einem Objektivrevolver bekannt (siehe ersten Teil des Anspruchs 1), in dessen einer Objektivaufnahme ein Akustoobjektiv mittels einer Halterung befestigbar ist. Dabei wird ein Schwingelement des Akustoobjektivs in eine schnelle, hin- und hergehende Bewegung in x-Richtung über einem Objekt versetzt, wozu eine Antriebseinheit mit einem Arm dient. Der Objekttisch wird mittels eines weiteren Antriebs mit geringer Geschwindigkeit in y-Richtung bewegt. Für eine Verwendung des optischen Mikroskops als akustisches Mikroskop bedarf es nur einer Umschaltung des Objektivrevolvers. Diese Vorrichtung ermöglicht aufgrund des bewegten Objekts keine direkte lichtmikroskopische Beobachtung während der akusto-mikroskopischen Untersuchung.

Schließlich ist es bekannt (LEITZ-Mitt. Wiss. u. Techn. Bd. VIII. Nr. 3/4, S. 61-67, Wetzlar, Mai 1982), ein akustisches Rastermikroskop mit einem Auflichtmikroskop zu kombinieren. Diese Anordnung umfaßt einen Unterbau mit einem Objekttisch und einem vertikal in die Arbeitsposition einschwenkbaren Schwingersystem mit dem Akustoobjektiv sowie das auf einem horizontal schwenkbaren Träger montierte Àuflichtmikroskop. Dieses kann anstelle des Schwingersystems mit Akustoobjektiv über dem Objekt in Arbeitsstellung gebracht werden. Das akustische und das Lichtmikroskop sind so zueinander justiert, daß lichtmikroskopisch ausgewählte Objektdetails anschließend mit kaum nennenswerter Abweichung im akustomikroskopischen Bild wiedergefunden werden können. Bei der erforderlichen rasterförmigen Abtastung des Objekts mittels des Ultraschallfokus wird die schnelle Bewegung in Zeilenrichtung des Rasters dem hinsichtlich seiner Masse konstanten Objektiv und die langsame schrittweise Bewegung senkrecht zur Zeilenrichtung dem Objekttisch mit dem hinsichtlich seiner Masse variablen Objekt zugeordnet. Eine gleichzeitige optische Untersuchung des letzteren ist mittels dieser Anordnung somit nicht möglich.

Der Erfindung liegt die Aufgabe zugrunde, ein Verfahren der eingangs genannten Art anzugeben, welches in sich noch weitere Variationen ermöglicht, ohne eine schwierige Synchronisierung der Rasterbewegung größerer und insbesondere in ihrer Masse ungleicher oder veränderlicher Geräteteile durchführbar ist, keine aufwendige Vorbereitung sowie Positionierung des Objektes erforderlich und mit dem auch während der akustischen und/oder optischen Bildaufzeichnung das Objekt gleichzeitig visuell wie mit einem herkömmlichen Lichtmikroskop beobachtet werden kann. Entsprechend einem weiteren Ziel der Erfindung soll dazu eine Vorrichtung bereitgestellt werden, mit der bei gewichts- und größenmäßig weitgehend beliebigen Objekten und deren Aufnahmen die einzelnen Untersuchungen mit hoher Präzision durchführbar sind, so daß bei gleichzeitiger Untersuchung exakt auf dasselbe Objektdetail fokussiert und auch bei abwechselnden Untersuchungen eine genau reproduzierbare Fokussierung ermöglich wird.

Das erfindungsgemäße Verfahren löst diese Aufgabe entsprechend dem kennzeichnenden Teil des Anspruchs 1.

Als Strahlen unterschiedlicher Art können insbesondere Lichtstrahlen, Laserstrahlen und Ultraschallwellen Verwendung finden. So können ein Lichtstrahl und ein akustischer Strahl auf derselben Seite des Objekts erzeugt werden, wobei der fokussierte Lichtstrahl zur Auswahl und zur Auf- oder Durchlichtuntersuchung eines Objektdetails dient, welches anschließend mittels des fokussierten akustischen Strahls in zwei rechtwinklig zueinander stehenden Richtungen, also rasterförmig abgetastet und sodann nach Umsetzung in elektrische Signale sichtbar dargestellt wird. Weiterhin können auch zwei akustische Strahlen unterschiedlicher Frequenz nacheinander auf derselben Seite des Objekts erzeugt und unter Abtastung eines Objektbereichs darauf fokussiert werden, wodurch akustische Bilder unterschiedlicher Auflösung erhalten werden. Zur gleichzeitigen licht- und akustomikroskopischen Untersuchung sowie Bilderzeugung können auch ein Lichtstrahl und ein akustischer Strahl auf einander gegenüberliegenden Seiten des Objekts erzeugt und gleichzeitig auf demselben Objektdetail fokussiert werden, da das Objekt stets stationär gehalten wird und nur der akustische Strahl die Abtastbewegung ausführt. In weiterer Ausgestaltung des erfindungsgemäßen Verfahrens können auch ein Laserstrahl und ein akustischer Strahl auf einander gegenüberliegenden Seiten des Objekts erzeugt und gleichzeitig zur Untersuchung desselben Objektdetails auf demselben fokussiert werden. Dabei kann für die Abtastbewegung des Laserstrahls dessen Strahlungsquelle selbst stationär angeordnet sein und der Laserstrahl auf ein mit der Abtastbewegung durch den akustischen Strahl synchronisiertes Umlenkelement gerichtet sein. Auf diese Weise können dilatometrische Messungen und Untersuchungen an Objekten in Verbindung mit akustomikroskopischen Beobachtungen sichtbar gemacht werden.

Die Erfindung betrifft außerdem eine Vorrichtung zur Durchführung mehrerer einander ergänzender licht- und akustomikroskopischer Untersuchungen an einem Objekt entsprechend dem kennzeichnenden Teil des Anspruchs 1. Diese Vorrichtung ermöglicht durch die Verwendung einiger Grundbaugruppen mit funktionsgebundener Zuordnung zueinander die Durchführung einer Reihe unterschiedlicher licht- und akustomikroskopischer Untersuchungsverfahren sowohl gleichzeitig als auch nacheinander, wobei die Objekte sowie die Objektaufnahmen aufgrund ihrer feststehenden Anordnung gewichts- und größenmäßig in weiten Grenzen variiert werden können und das Aufsuchen oder die Identifizierung bestimmter Objektdetails durch Verwendung einfacher Lagerungen und Rastungen ohne Schwierigkeiten mit großer Präzision durchführbar ist.

Zweckmäßig besteht die Stativsäule aus zwei U-förmigen Elementen, zwischen denen ein durch eine Grob-Feinverstellung vertikal bewegbarer Schieber angeordnet ist, welcher mit den U-förmigen Elementen mittels einer vorgespannten Rollenführung verbunden ist. Außer einer raschen Grobverstellung ist dadurch in jeder beliebigen Schieberstellung eine spielfreie Bewegung des Schiebers mit äußerst geringen Stellwegen möglich.

Gemäß einer vorteilhaften Ausgestaltung der erfindungsgemäßen Vorrichtung ist der Drehteller im Schieber drehbar gelagert und aus einer verriegelten Betriebsstellung durch Anheben zusammen mit dem Schieber und unabhängig von dessen Grob-Feinverstellung entriegelbar. Auf diese Weise werden Beschädigungen an Objektiven oder Objekten zuverlässig verhindert, da eine Schwenkbewegung des Drehtellers erst dann möglich ist, nachdem dieser mit dem Schieber nach oben aus der Arbeitsstellung bewegt wurde. In dieser ausgeschwenkten Stellung erfolgt außerdem die Reinigung der akustischen Objektive sowie deren Benetzung mit einer Immersionsflüssigkeit.

Entsprechend einer Weiterbildung der Erfindung ist auf der Grundplatte ein Ständer mit einer höhenverstellbaren Führung zur Befestigung wenigstens eines weiteren mikroskopischen Untersuchungsgeräts montiert, welches der Unterseite der Objektaufnahme zugeordnet ist. Je nach Anordnung entsprechender mikroskopischer Untersuchungsgeräte an der Führung des Ständers und in den Aufnahmen des Drehtellers können auf diese Weise eine Vielzahl von Untersuchungen durchgeführt und Kombinationen vorgenommen werden, wie die folgenden Beispiele zeigen :

1. Lichtmikroskopische Einzeluntersuchungen

(a) Zum Aufsuchen und Einstellen eines bestimmten Objektdetails sowie zur zusätzlichen Interpretation eines akustischen Bildes kann in eine Aufnahme des Drehtellers ein Auflichtmikroskop eingesetzt werden, welches in Verbindung mit einer entsprechenden Beleuchtungseinrichtung Abbildungen im
Hellfeld,
Dunkelfeld,
Polarisations-,
Fluoreszenz- und
Interferenzkontrastverfahren
in herkömmlicher Weise ermöglicht.
(b) Für Durchlichtuntersuchungen können in die Aufnahme des Drehtellers oberhalb der Objektebene ein Mikroskop eingesetzt und an der Führung des Ständers unterhalb der Objektebene unterschiedliche Kondensoren in Verbindung mit einer Beleuchtungseinrichtung befestigt werden, wodurch sich gleichfalls bekannte Verfahren der Hellfeld-, Dunkelfeld-, Polarisations- und Interferenzmikroskopie ergeben.

(c) Sowohl für Auflicht- als auch für Durchlichtuntersuchungen kann an der Führung des Ständers unterhalb der Objektaufnahme ein dieser zugeordnetes Mikroskop angeordnet werden. Dieses kann in Verbindung mit einer in eine Aufnahme des Drehtellers eingesetzte Beleuchtungsvorrichtung zu Durchlichtuntersuchungen oder bei Verwendung eines Opakilluminators zu Auflichtuntersuchungen benutzt werden. Zur Höhenverstellung zwecks Fokussierung kann das umgekehrte Mikroskop insgesamt mittels einer Grob-Feinverstellung in der Führung des Ständers bewegt werden.

## 2. Akustomikroskopische Einzeluntersuchungen

(a) Zur akustomikroskopischen Untersuchung eines Objekts nach dem Reflexionsverfahren, wobei ein Objektdetail zuvor gegebenenfalls lichtoptisch ausgesucht oder identifiziert wurde, wird ein akustomikroskopischer Gerätekopf mit einem akustischen Objektiv in eine Aufnahme des Drehtellers eingesetzt. Das akustische Objektiv dient sowohl als Strahlungsquelle als auch als Empfänger für die fokussierten Ultraschallwellen, erfordert zur Bilderzeugung eine systematische rasterförmige Abtastung des Objektdetails und ist in Aufbau und Wirkungsweise bekannt.

Das Abtasten des während der Bildaufnahme unbewegten Objekts erfolgt bei sämtlichen akustomikroskopischen Untersuchungen als ein wesentliches Merkmal der Erfindung ausschließlich durch Bewegung der akustischen Objektivs in zwei rechtwinklig zueinander stehenden Richtungen mittels einer nachfolgend als x-y-Schwinger bezeichneten Einrichtung. Diese ist aus der DE-OS 31 35 180 an sich bekannt, weswegen hier nur eine kurze Beschreibung der Funktionsweise im Zusammenhang mit dem akustischen Objektiv genügt.

Der x-y-Schwinger besteht im wesentlichen aus einem inneren Schwingersystem für die y-Richtung und aus einem äußeren Schwingersystem für die x-Bewegung des akustischen Objektivs. Das innere Schwingersystem ist als symmetrisches Lenkergetriebe ausgeführt, wodurch sich das damit fest verbundene akustische Objektiv auf einer Geraden bewegt. Die bei höheren Frequenzen auftretenden Schwingungen werden durch einen dynamischen Massenausgleich kompensiert, wobei die Bewegungen der Gegenmasse um 180° phasenversetzt zur Schwingerbewegung verlaufen. Zur schrittweisen x-Bewegung des akustischen Objektivs ist als äußeres Schwingsystem ein Federparallelogrammschwinger vorgesehen. Der Antrieb der beiden Schwingersysteme kann durch Tauchspulenvibratoren erfolgen, wobei wegen der größeren Masse, die während der Bewegungsumkehr des inneren Schwingsystems um einen genauen Betrag bewegt werden muß, für das äußere Schwingsystem ein entsprechend stärkerer Vibrator oder zwei Vibratoren verwendet werden können. Zur Steuerung der Antriebssysteme dienen Leucht- und Fotodifferenzdioden. Mittels dieser Schwingereinrichtung kann zum einen durch ein Meßsystem in Verbindung mit den Steuermitteln die Größe der Bewegung mit großer Präzision verändert und zum anderen erreicht werden, daß die schrittweise Bewegung während der Richtungsumkehr der Schwingerbewegung erfolgt.

(b) Werden in die Aufnahmen des Drehtellers zwei akustomikroskopische Geräteköpfe mit Objektiven für unterschiedliche Ultraschallfrequenzen eingesetzt, so kann mit der erfindungsgemäßen Vorrichtung ein schneller Wechsel zwischen akustomikroskopischen Aufnahmen hoher Auflösung und geringer Eindringtiefe sowie Aufnahmen geringer Auflösung und großer Eindringtiefe vorgenommen werden. Dabei hat sich gezeigt, daß dieser Wechsel mit einer Positioniergenauigkeit von ± 5 μm durchführbar ist, wodurch Untersuchungen und Auswertungen tatsächlich exakt am gleichen Objektdetail erfolgen. Bei entsprechend geringen Fertigungstoleranzen kann ein Wechsel der akustischen Objektive auch unmittelbar unter Verwendung desselben x-y-Schwingers vorgenommen werden.

## 3. Gleichzeitige licht- und akustomikroskopische Untersuchungen

(a) Diese können durchgeführt werden, wenn in eine Aufnahme des Drehtellers ein akustomikroskopischer Gerätekopf eingesetzt und ein Lichtmikroskop, umgekehrter Bauart an der Führung des Ständers unterhalb der Objektebene befestigt werden. Das zu untersuchende Objekt wird hierbei in der Objektaufnahme angeordnet und durch eine x-y-Verstellung derselben positioniert. Während der Untersuchungen bleibt die Objektivaufnahme und damit das Objekt unbewegt, wobei letzteres vom akustischen Objektiv in der beschriebenen Art und Weise rasterförmig abgetastet wird. Zur genauen Einstellung der Eindringtiefe für die akustische Untersuchung unterhalb der Oberfläche des Objekts dient die Feinverstellung des Schiebers. Die lichtmikroskopische Untersuchung erfolgt dabei mittels Auflicht, wobei sämtliche unter 1a) genannten Abbildungsverfahren möglich sind.

(b) Selbstverständlich kann im Bedarfsfall auch das Lichtmikroskop in eine Aufnahme des Drehtellers eingesetzt und der akustomikroskopische Gerätekopf an der Führung des Ständers angeordnet sein.

## 4. Weitere Varianten

(a) Eine gleichzeitige Verwendung zweier akustomikroskopischer Geräteköpfe ermöglicht eine Untersuchung nach dem Transmissionsverfahren. Der auf der einen Seite des Objekts angeordnete Gerätekopf kann dabei als Sender für die Ultraschallwellen, derjenige auf der gegenüberliegenden Seite als Empfänger dienen; dabei laufen zwei x-y-Schwinger synchron.

(b) Anstelle des lichtoptischen Abbildungssystems nach 3a) und b) kann auch eine Laser-Impulseinrichtung verwendet werden, wodurch photoakustische Untersuchungen durchführbar sind (EP-PS 00 12 262). Die Lasereinrichtung kann an der Führung des Ständers montiert oder im Falle der Verwendung eines umgekehrten Mikroskops in einer Tubusaufnahme desselben angeordnet sein. In beiden Fällen bleibt die Strahlungsquelle für den Laserstrahl unbewegt, und die rasterförmige Abtastung durch letzteren wird mittels eines Umlenkelements, beispielsweise einen Scanningspiegel erzielt, dessen Bewegung mit der des x-y-Schwingers synchronisiert ist. Dabei wird jeweils in dem Moment, in dem ein akustisches Signal von einem Objektdetail abgenommen wird, dieses Detail von einem Laserimpuls beaufschlagt. Als bekannte Mittel zur Darstellung und Aufzeichnung der nach den einzelnen Verfahren gewonnenen mikroskopischen Bilder können oszillographische Displaysysteme mit nachleuchtenden Schirmen sowie analoge oder digitale Bildspeicher in Verbindung mit normalen Fernsehmonitoren verwendet werden.

Weitere Einzelheiten der Erfindung gehen aus der nachfolgenden Beschreibung mehrerer in der Zeichnung schematisch dargesteller Ausführungsbeispiele hervor.

Es zeigen

Fig. 1 eine vereinfachte Seitenansicht eines ersten Ausführungsbeispiels der erfindungsgemäßen Vorrichtung zur Durchführung aufeinanderfolgender licht- und akustomikroskopischer Untersuchungen,

Fig. 2 eine Draufsicht gemäß Darstellung von Fig. 1,

Fig. 3 ein anderes Ausführungsbeispiel gemäß Fig. 1, jedoch unter Verwendung eines umgekehrten Lichtmikroskops,

Fig. 4 ein drittes Ausführungsbeispiel zur Durchführung gleichzeitiger licht- und akustomikroskopischer Untersuchungen in vereinfachter Seitenansicht,

Fig. 5 ein viertes Ausführungsbeispiel unter Verwendung einer Lasereinrichtung, und

Fig. 6 eine Schnittansicht des prinzipiellen mechanischen Aufbaus der Verstelleinrichtung der erfindungsgemäßen Vorrichtung.

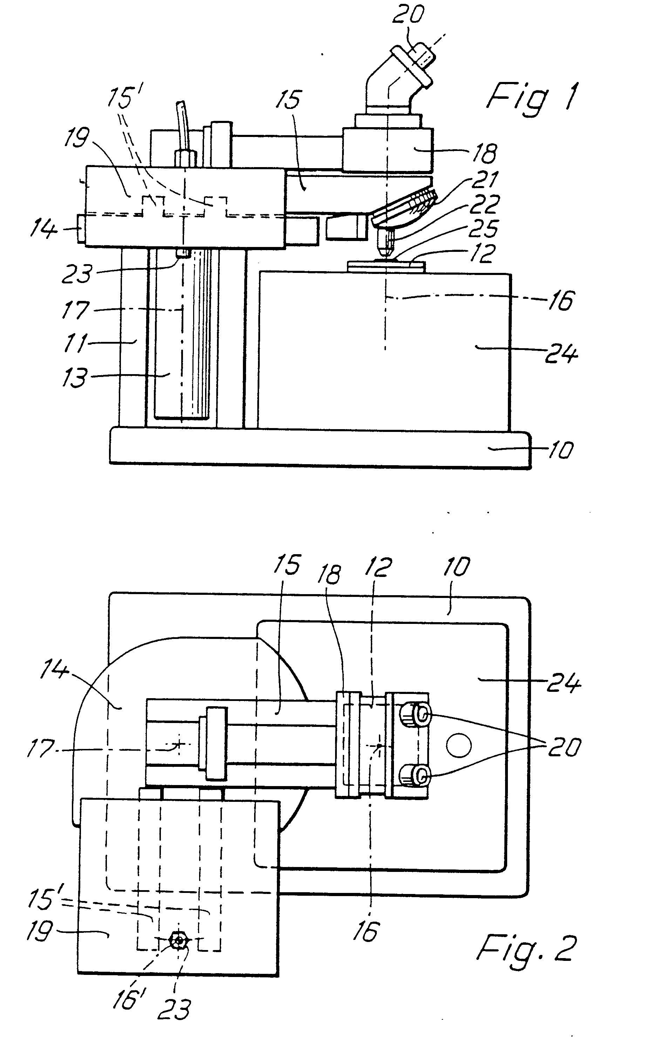

In dem Ausführungsbeispiel nach den Fig. 1 und 2 sind auf einer Grundplatte (10) eine aus zwei U-förmigen Elementen bestehende Stativsäule (11) und eine Objektaufnahme (12) montiert. Die Stativsäule (11) bildet die Führung für einen vertikal bewegbaren Schieber (13), welcher mittels noch näher zu beschreibender Bauelemente einen Drehteller (14) trägt, dessen Ebene parallel zur Grundplatte (10) verläuft. Im Drehteller (14) sind in Raststellungen jeweils um 90° versetzt Aufnahmen (15, 15') zur Befestigung unterschiedlicher mikroskopischer Untersuchungsgeräte vorgesehen, wobei deren Beobachtungsachsen (16, 16') parallel und im gleichen Abstand zur Drehachse (17) des Drehtellers (14) verlaufen. Im vorliegenden Ausführungsbeispiel sind in den Aufnahmen (15) eine eingeschwenkte lichtmikroskopische Einrichtung (18) für auflichtmikroskopische Untersuchungen und eine ausgeschwenkte akustomikroskopische Einrichtung (19) für anschließende Beobachtungen mittels reflektierter Ultraschallwellen befestigt. Die lichtmikroskopische Einrichtung (18) enthält im wesentlichen einen Binokulartubus (20) sowie ein an einem Objektivrevolver (21) befestigtes Objektiv (22) und ist als solches an sich bekannt, so daß sich eine genauere Beschreibung erübrigt. Das gleiche gilt für die als ganzes dargestellte akustomikroskopische Einrichtung (19) mit einem nur angedeuteten akustischen Objektiv (23), wobei die Einrichtung als wesentlichen Bestandteil den Schwinger und dessen Antrieb enthält und das Objektiv (23) zugleich als Sender und als Empfänger für die Ultraschallwellen dient.

Die Objektaufnahme (12) ist auf einem Tragrahmen (24) angeordnet, welcher auf der Grundplatte (10) montiert ist und dient zur Aufnahme und Positionierung eines Objektes (25) in x-y-Koordinaten. Je nach Aufgabenstellung können als Objektaufnahme (12) unterschiedliche, an sich bekannte Objekttische wie beispielsweise Standard- oder dreh- und zentrierbare Kreuztische mit Koordinaten- und Winkelwertspeicherung sowie mit Aufnahmebohrungen für Heiztische verwendet werden, wobei der Antrieb der Objekttische motorisch oder manuell erfolgen kann.

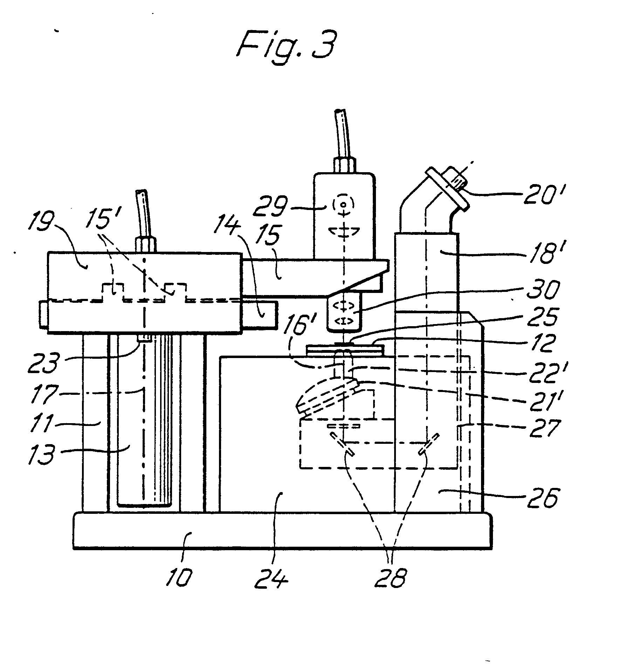

Das in Fig. 3 gezeigte Ausführungsbeispiel unterscheidet sich von dem nach Fig. 1 und 2 im wesentlichen durch die Anordnung der lichtmikroskopischen Einrichtung (18') mit Binokulartubus (20'), welche als umgekehrtes Mikroskop in einem auf der Grundplatte (10) montierten Ständer (26) aufgenommen und in einer Führung (27) mittels einer hier nicht gezeigten Grob-Feinverstellung auf und ab bewegbar ist. Der Objektivrevolver (21') mit den Objektiv (22') befinden sich in dem Freiraum innerhalb des Tragrahmens (24) unterhalb der Objektaufnahme (12). In der Beobachtungsachse (16') sind in bekannter Weise Spiegel (28) angeordnet. In der einen Aufnahme (15) des Drehtellers (14) ist hier eine Beleuchtungseinrichtung (29) mit einem Kondensor (30) in Betriebsstellung befestigt, während die akustomikroskopische Einrichtung (19) in der anderen Aufnahme (15') ausgeschwenkt ist. Mit dieser Anordnung sind lichtmikroskopische Untersuchungen sowohl im Auflicht als auch im Durchlicht sowie anschließend akustomikroskopische Beobachtungen möglich.

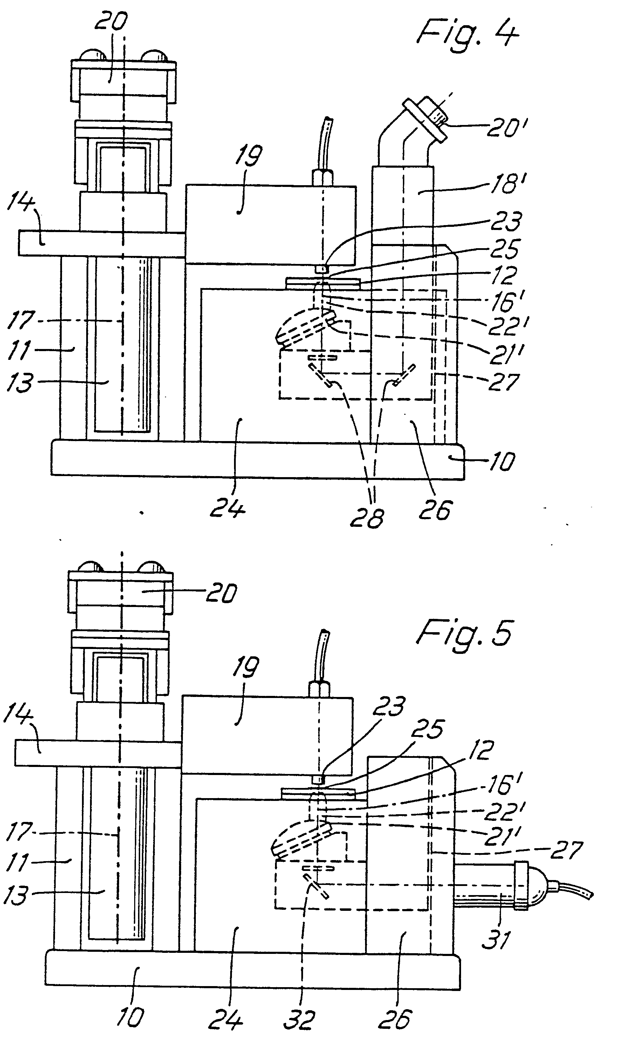

Beim in Fig. 4 gezeigten Ausführungsbeispiel besteht die lichtmikroskopische Einrichtung (18') gleichfalls aus dem umgekehrten Mikroskop. Zur gleichzeitigen Durchführung akustomikroskopischer Untersuchungen ist jedoch die akustomikroskopische Einrichtung (19) mit dem hier nicht dargestellten Antrieb für die bereits beschriebene x-y-Abtastung des Objektes (25) mittels des akustischen Objektivs (23) in Betriebsstellung eingeschwenkt und damit auf der gegenüberliegenden Seite angeordnet.

Mit der in Fig. 5 gezeigten Anordnung sind fotoakustische Untersuchungen durchführbar.

Anstelle der lichtmikroskopischen Einrichtung (18') in Form eines umgekehrten Mikroskops ist bei diesem Ausführungsbeispiel im Ständer (26) eine Lasereinrichtung (31) höhenverstellbar angeordnet, wobei sich die akustomikroskopische Einrichtung (19) gegenüber gleichzeitig in Betriebsstellung befindet. Der von der Lasereinrichtung (31) ausgesandte gepulste Laserstrahl wird mittels eines Scanspiegels (32) auf die Unterseite des Objektes (25) reflektiert, wobei der Scanspiegel (32) mit der Schwingerbewegung in der akustomikroskopischen Einrichtung (19) synchronisiert ist, so daß bei feststehender Lasereinrichtung (31) gleichzeitig auch eine rasterförmige Abtastung des Objektes (25) durch die Laserimpulse erfolgt.

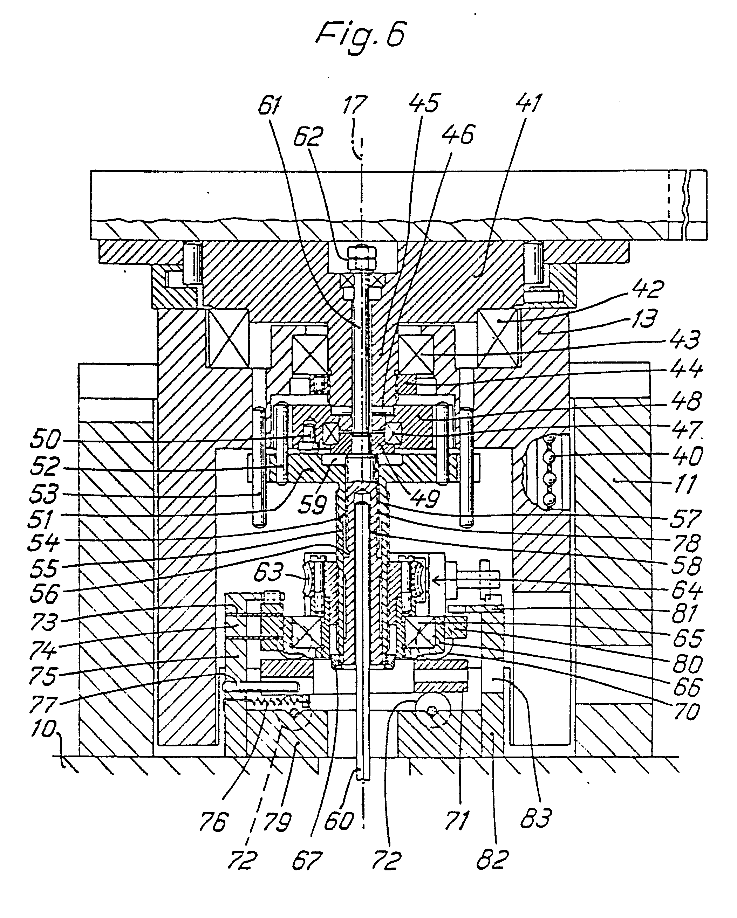

In der in Fig. 6 im Schnitt gezeigten Anordnung ist wiederum die Grundplatte (10) mit der darauf montierten Stativsäule (11) dargestellt, in welcher der Schieber (13) vertikal geführt ist. Als Führung sind zur Vermeidung von Spiel vorgespannte Wälzlager (40) verwendet. Auf dem Schieber (13) ist ein Flansch (41) mittels eines Axiallagers (42), eines Kegelrollenlagers (43) sowie eines Vorschraubringes (44) drehbar befestigt. Der Flansch (41) ist mit dem die Aufnahmen (15, 15') für die hier nicht gezeigten mikroskopischen Untersuchungsgeräte aufweisenden Drehteller (14) fest verbunden, beispielsweise verschraubt und besitzt einen sich nach unten erstreckenden, zylindrischen Stutzen (45). Dieser ist mittels eines Mitnehmerstiftes (46) und eines Kugellargers (47) mit einem Lagerring (48) drehsicher verbunden. Das Kugellager (47) wird von einem Auflagering (49) getragen. Im Lagerring (48) sind Auflagestifte (50) eingesetzt, mit welchen der Lagerring (48) auf einem Teller (51) aufliegt. In den Teller (51) sind vertikale Sperrstifte (52) eingesetzt, welche mit ihrem oberen Abschnitt im Lagerring (48) geführt sind. Weitere Längsstifte (53) sind zwischen Schieber (13) und Teller (51) eingesetzt und durchdringen den letzteren im Bereich seines Umfanges.

Der Teller (51) ist mit einem sich nach unten erstreckenden zylindrischen Ansatz (54) versehen, der ein Außengewinde (55) sowie eine zentrale Bohrung (56) mit einem Innengewinde (57) im oberen Abschnitt aufweist. In der Bohrung (56) ist eine Spindel (58) geführt und im Innengewinde (57) vertikal verstellbar. Das obere Ende der Spindel (58) ragt aus einer ringförmigen Aussparung (59) im Zentrum des Tellers (51) hervor und liegt an der unteren Fläche des Auflageringes (49) an. Innerhalb der Spindel (58) ist koaxial ein Sechskantstift (60) angeordnet. Dieser ist durch die Grundplatte (10) nach unten fortgeführt und in hier nicht weiter dargestellter Weise motorisch oder auch manuell antreibbar.

Durch den Flansch (41) erstreckt sich die zylindrische Verlängerung des Spindel (58) als eine zentrale Achse (61), welche mit ihrem unteren Ende im Auflagering (49) und mit ihrem oberen Ende im Flansch (41) gelagert und mittels zwei Kontermuttern (62) in demselben gehalten ist.

In das Außengewinde (55) des Ansatzes (54) greift ein Schneckenrad (63) ein, das mittels einer Schnecke (64) über ein Kugellager (65) drehbar in einem Lagerelement (66) befestigt ist und somit den Teller (51) trägt. Das untere Ende des Ansatzes (54) weist einen Gewindering (67) auf.

Im Lagerelement (66) sind weitere obere Kugellager (70) befestigt, die mit ihrem Außenring auf der Oberseite eines leicht keilförmig ausgebildeten Schieberelements (71) aufsitzen, welches sich andererseits auf unteren Kugellagern (72) abstützt und dadurch mittels eines hier nicht gezeigten Antriebs von außen horizontal verschiebbar ist. Das Lagerelement (66) ist in einem Ende eines Blattfederparallelogramms (73) befestigt und geführt, welches mit seinem anderen Ende mittels Zwischenplatten (74) an einem auf der Grundplatte (10) montierten, vertikalen Träger (75) gehalten ist. Zur spielfreien Bewegung des Schieberelementes (71) ist eine Zugfeder (76) an demselben befestigt, deren anderes Ende am Träger (75) angreift. Die Geradführung des Schieberelementes (71) erfolgt durch einen in demselben eingesetzten Führungsstift (77), der mit seinem anderen Ende im Träger (75) befestigt ist.

Bei der nachfolgenden Beschreibung der Funktionsweise der Stativanordnung wird zunächst von der in Fig. 6 gezeigten Arbeitsstellung des Drehtellers (14) ausgegangen. In dieser Stellung ist eine Schwenkbewegung des Drehtellers (14) nicht möglich, da einerseits der Lagerring (48) durch den Mitnehmerstift (46) drehsicher mit dem Flansch (41) verbunden ist und andererseits der Lagerring (48) durch die vertikalen Sperrstifte (52) gegen eine Drehung gesichert ist. Auf diese Weise wird eine Berührung zwischen Objektiven und Objekt oder eine Beschädigung derselben durch Verschwenken des Drehtellers (14) zuverlässig verhindert. Sowohl die Grob- als auch die Feinverstellung der Anordnung wird in dieser Arbeitsstellung vorgenommen, worauf später noch näher eingegangen wird.

Die vertikale Schnellverstellung zum Schwenken des Drehtellers (14) in Raststellungen von jeweils 90° erfolgt durch Antrieb des Sechskantstiftes (60), wodurch die Spindel (58) innerhalb der Bohrung (56) im Innengewinde (57) des zylindrischen Ansatzes (54) nach oben gedreht wird. Dabei werden der Auflagering (49) mit dem Kugellager (47), der Lagerring (48) mit dem Mitnehmerstift (46), der Flansch (41) mit dem Vorschraubring (44), dem Axial- und Kugelrollenlager (42, 43) und damit der Schieber (13) und der Drehteller (14) gleichzeitig angehoben. Die Entriegelungsstellung ist erreicht, sobald sich die Unterkante des Lagerrringes (48) über der Oberkante der Sperrstifte (52) befindet, worauf die Aufwärtsbewegung der Spindel (58) sowie der genannten Bauteile durch einen Innenanschlag (78) in der Bohrung (56) des Ansatzes (54) begrenzt wird. In dieser Lage ist der Drehteller (14) um die zentrale Achse (61) im Flansch (41) innerhalb des Schiebers (13) im Axiallager (42) und im Kegelrollenlager (43) in eine um 90° versetzte Raststellung schwenkbar, wobei die Drehsicherung zwischen Schieber (13) und Teller (51) aufgrund der zwischen beiden angeordneten Längsstifte (53) erhalten bleibt.

Eine Abwärtsbewegung des Drehtellers (14) ist dabei nur in einer der Raststellungen möglich, da in den Zwischenstellungen die Unterseite des Lagerringes (48) auf die Sperrstifte (52) auftrifft und eine nach unten gerichtete Bewegung der genannten Bauteile verhindert. Nach Einnahme einer neuen Raststellung des Drehtellers (14) erfolgt durch Antrieb des Sechskantstiftes (60) in der entgegengesetzten Richtung ein Absenken des Drehtellers (14) zusammen mit den Bauteilen (13 und 41-49), wobei die Sperrstifte (52) den Lagerring (48) wieder aufnehmen und den zuvor beschriebenen Zustand wiederherstellen. Dabei wird der untere Anschlag für diese Abwärtsbewegung durch die Auflagestifte (50) gebildet, welche auf den Teller (51) auftreffen.

Die Grobverstellung zum Zwecke der Vorfokussierung erfolgt in einer der Raststellungen durch Betätigung der Schnecke (64), deren nach außen geführter, an sich bekannter und daher hier nicht gezeigter Antrieb manuell oder motorisch erfolgen kann. Durch die Betätigung der Schnecke (64) wird das im Lagerelement (66) befestigte Schneckenrad (63) über das Kugellager (65) gedreht und bewegt durch Eingriff in das Außengewinde (55) des Ansatzes (54) den Teller (51) in vertikaler Richtung im Schieber (13). Der Teller (51) überträgt die Bewegung über die Auflagestifte (50) auf den Lagerring (48), den Flansch (41) sowie den Drehteller (14) und damit auf die mikroskopische Untersuchungseinrichtung. Im vorliegenden Fall ermöglicht die vertikale Grobverstellung einen Hub von 40 mm. Dieser wird mittels des Gewinderinges (67) und die untere Fläche des Schneckenrades (63) als Anschlag begrenzt.

Zur Feinverstellung mittels eines hier nicht gezeigten Antriebs, beispielsweise durch Gewindespindel und Mutter, wird das leicht keilförmige Schieberelement (71) zwischen den im Lagerelement (66) befestigten oberen Kugellagern (70) und den auf einer Platte (79) angeordneten unteren Kugellagern (72) horizontal verschoben, wobei die Platte (79) auf der Grundplatte (10) montiert ist. Zur spielfreien Bewegung des Schieberelements (71) dient die Zugfeder (76) zu dessen Geradführung der Führungsstift (77). Mit der Horizontalbewegung des Schieberelements (71) ist eine Vertikalbewegung des Lagerelements (66) verbunden, welches am Blattfederparallelogramm (73) befestigt ist. Die Bewegung des Lagerelements (66) wird wiederum über den Teller (51) und den Lagerring (48) auf den Flansch (41) sowie den Drehteller (14) in gleicher Weise wie bei der Grobverstellung übertragen. Die Feinverstellung wird nach oben durch eine am Lagerelement (66) montierte Anschlagleiste (80) und eine Deckplatte (81) begrenzt. Diese ist am oberen Ende einer Aufnahmeplatte (82) befestigt, in welcher durch eine Öffnung (83) der Antrieb für die Feinverstellung nach außen geführt ist. Letztere ermöglicht hier einen Hub von ± 0,1 mm bei einer Auflösung von 0,1 μm.

Die vorstehend beschriebene Grob-Feinverstellung kann auch zur Vertikalbewegung der in der Führung (27) des Ständers (26) befestigten mikroskopischen Untersuchungsgeräte verwendet werden, welche der Unterseite der Objektaufnahme (12) zugeordnet sind. Anstelle dieser Grob-Feinverstellung auf getrennten Achsen können auch, insbesondere bei manueller Einstellung, beide Grob-Feinverstellungen auf einer gemeinsamen Achse in an sich bekannter Weise vorgesehen sein. Bei weiterer Automatisierung und insbesondere bei motorischer Verstellung der Vorrichtung können statt der beschriebenen Anschläge Endschalter verwendet werden.

Bezugszeichenliste

10 Grundplatte
11 Stativsäule
12 Objektaufnahme
13 Schieber
14 Drehteller
15, 15' Aufnahmen
16, 16' Beobachtungsachsen
17 Drehachse
18, 18' Lichtmikroskop
19 akustomikroskopische Einrichtung
20, 20' Binokulartubus von 18, 18'
21, 21' Objektivrevolver von 18, 18'
22, 22' Objektiv von 18, 18'
23 Objektiv von 19
24 Tragrahmen
25 Objekt
26 Ständer
27 Führung
28 Spiegel
29 Beleuchtungseinrichtung
30 Kondensor
31 Lasereinrichtung
32 Scanspiegel
40 Wälzlager
41 Flansch
42 Axiallager
43 Kegelrollenlager
44 Vorschraubring
45 Stutzen
46 Mitnehmerstift
47 Kugellager
48 Lagerring
49 Auflagering
50 Auflagestift
51 Teller
52 Sperrstift
53 Längsstift
54 Ansatz
55 Außengewinde
56 Bohrung
57 Innengewinde
58 Spindel
59 Aussparung
60 Sechskantstift
61 zentrale Achse
62 Kontermutter
63 Schneckenrad
64 Schnecke
65 Kugellager

66 Lagerelement
70 obere Kugellager
71 Schieberelement
72 untere Kugellager
73 Blattfederparallogramm
74 Zwischenplatte
75 Träger
76 Zugfeder
77 Führungsstift
78 Innenanschlag
79 Platte
80 Anschlagleiste
81 Deckplatte
82 Aufnahmeplatte
83 Öffnung

**Patentansprüche**

1. Verfahren zur Durchführung mehrerer einander ergänzender licht- und akustomikroskopischer Untersuchungen an einem Objekt, wobei mittels entsprechender Strahlungsquellen wenigtens zwei Strahlen unterschiedlicher Art erzeugt, gleichzeitig auf dem Objekt fokussiert und durch an sich bekannte feststehende Mittel sichtbar dargestellt werden und wobei das unbewegte Objekt in zwei rechtwinklig zueinander stehenden Richtungen rasterförmig abgetastet wird, dadurch gekennzeichnet, daß zur direkten visuellen Darstellung nur Strahlungsquellen einer Strahlungsart zur Abtastung bewegt werden und daß die Strahlen unterschiedlicher Art gegebenenfalls auch nacheinander auf dem Objekt fokussiert werden.

2. Verfahren nach Anspruch 1, dadurch gekennzeichnet, daß ein Lichtstrahl zur Einstellung und anschließenden Auflichtuntersuchung sowie ein akustischer Strahl auf derselben Seite des Objektes zur aufeinander folgenden Untersuchung desselben Objektdetails erzeugt werden, wobei der akustische Strahl das Objekdetail in zwei rechtwinklig zueinander stehenden Richtungen abtastet.

3. Verfahren nach Anspruch 1, dadurch gekennzeichnet, daß ein Lichtstrahl zur Einstellung und anschließenden Durchlichtuntersuchung sowie ein akustischer Strahl auf einander gegenüberliegenden Seiten des Objektes zur aufeinander folgenden Untersuchung desselben Objekdetails erzeugt werden, wobei der akustische Strahl das Objektdetail in zwei rechtwinklig zueinander stehenden Richtungen abtastet.

4. Verfahren nach Anspruch 1, dadurch gekennzeichnet, daß nacheinander zwei akustische Strahlen unterschiedlicher Frequenz auf derselben Seite des Objekts erzeugt werden, mit welchen das Objekt abgetastet wird.

5. Verfahren nach Anspruch 1, dadurch gekennzeichnet, daß ein Lichtstrahl und ein akustischer Strahl auf einander gegenüberliegenden Seiten des Objekts zur gleichzeitigen Untersuchung desselben Objektdetails erzeugt werden, wobei der akustische Strahl das Objektdetail in zwei rechtwinklig zueinander stehenden Richtungen abtastet.

6. Verfahren nach Anspruch 1, dadurch gekennzeichnet, daß ein Laserstrahl und ein akustischer Strahl auf einander gegenüberliegenden Seiten des Objekts zur gleichzeitigen Untersuchung desselben Objektdetails erzeugt werden, wobei der akustische Strahl direkt und der Laserstrahl nach Reflexionsynchron mit dem akustischen Strahl des Objektdetail in zwei rechtwinklig zueinander stehenden Richtungen abtastet.

7. Vorrichtung zur Durchführung mehrerer einander ergänzender licht- und akustomikroskopischer Untersuchungen an einem Objekt (25) mit einem Drehteller (14), der mindestens zwei Aufnahmen (15, 15') für unterschiedliche mikroskopische Untersuchungsgeräte aufweist und der Raststellungen besitzt, in denen die Beobachtungsachsen (16, 16') der eingeschwenkten Untersuchungsgeräte jeweils dieselbe Lage gegenüber einer Objektaufnahme (12) einnehmen, dadurch gekennzeichnet, daß senkrecht auf einer Grundplatte (10) eine Stativsäule (11) befestigt ist, welche den Drehteller (14) trägt, der höhenverstellbar ist und dessen Ebene parallel zur Grundplatte (10) ausgerichtet ist und dessen Aufnahmen (15, 15') für licht- und akustomikroskopische Untersuchungsgeräte um 90° versetzt angeordnet sind, deren Beobachtungsachsen (16, 16') parallel und im gleichen Abstand zur Drehachse (17) des Drehtellers (14) liegen, daß im Schwenkbereich der Beobachtungsachsen (16, 16') auf der Grundplatte (10) mit Abstand von derselben die Objektaufnahme (12) vorgesehen und die Vorrichtung derart ausgebildet ist, daß während der sichtbaren Darstellung des Objekts (25) durch Abtasten desselben mit Strahlungsquellen nur einer Art eine direkte lichtmikroskopische Beobachtung durchführbar ist.

8. Vorrichtung nach Anspruch 7, dadurch gekennzeichnet, daß die Stativsäule (11) aus zwei U-förmigen Elementen besteht, zwischen denen ein durch eine Grob-Feinverstellung vertikal bewegbarer, den Drehteller (14) tragender Schieber (13) angeordnet ist, welcher mit den U-förmigen Elementen mittels eines vorgenannten Wälzlagers (40) verbunden ist.

9. Vorrichtung nach Anspruch 8, dadurch gekennzeichnet, daß der Drehteller (14) im Schieber (13) drehbar gelagert und aus einer verriegelten Betriebsstellung mittels Schnellverstellung zusammen mit dem Schieber (13) und unabhängig von dessen Grob-Feinverstellung entriegelbar ist.

10. Vorrichtung nach Anspruch 7, dadurch gekennzeichnet, daß auf der Grundplatte (10) ein Ständer (26) mit einer höhenverstellbaren Führung (27) zur Befestigung wenigstens eines weiteren mikroskopischen Untersuchungsgerätes montiert ist, welches der Unterseite der Objektaufnahme (12) zugeordnet ist.

11. Vorrichtung nach Anspruch 10, dadurch gekennzeichnet, daß an der höhenverstellbaren Führung (27) wenigstens eine weitere Einrichtung wie eine Beleuchtungseinrichtung, eine Lasereinrichtung (31), eine akustomikroskopische Einrichtung und eine lichtmikroskopische Einrichtung (18′) unter Bildung eines umgekehrten optischen Mikroskops befestigbar sind.

12. Vorrichtung nach einem oder mehreren der Ansprüche 7 bis 11, dadurch gekennzeichnet, daß in den Aufnahmen (15, 15′) des Drehtellers (14) wenigstens eine weitere Einrichtung wie eine lichtmikroskopische Einrichtung (18), eine Beleuchtungseinrichtung (29), eine Lasereinrichtung und eine akustomikroskopische Einrichtung (19) einsetzbar sind, wobei letztere mit einem Antriebssystem zur linearen Abtastung des Objekts (25) verbunden ist.

13. Vorrichtung nach einem oder mehreren der Ansprüche 8 bis 12, dadurch gekennzeichnet, daß auf dem Schieber (13) ein mit dem Drehteller (14) fest verbundener Flansch (41) zusammen mit einem drehsicher mit demselben verbundenen Lagerring (48) auf einem Auflagering (49) nach Anheben aus einer Raststellung um eine zentrale Achse (61) drehbar ist, und daß der Lagerring (48) in Raststellung drehsicher auf einem Teller (51) aufliegt, welcher mit einem vertikalen Ansatz (54) zur Höhenverstellung einer koaxial zur zentralen Achse (61) verlaufenden Spindel (58) versehen ist, deren oberes Ende am Auflagering (50) abgestützt ist.

14. Vorrichtung nach Anspruch 13, dadurch gekennzeichnet, daß der Ansatz (54) des Tellers (51) mit einem Außengewinde (55) versehen ist, welches ein mittels einer Schnecke (64) drehbar in einem Lagerelement (66) befestigtes Schneckenrad (63) trägt.

15. Vorrichtung nach einem oder mehreren der Ansprüche 7 bis 14, dadurch gekennzeichnet, daß zur Feinverstellung ein keilförmig ausgebildetes Schieberelement (71) zwischen im Lagerelement (66) befestigten oberen Kugellagern (70) und unteren Kugellagern (72) horizontal verschiebbar geführt ist, wobei letztere auf einer mit der Grundplatte (10) fest verbundenen Platte (79) angeordnet sind und das Lagerelement (66) von einem Ende eines Blattfederparallelogramms (73) gehalten ist, dessen anderes Ende mit einem auf der Grundplatte (10) montierten Träger (75) verbunden ist.


**Claims**

1. Method for the performance of several mutually augmenting optically and acoustically microscopic examinations at an object, wherein at least two beams of different kind are produced by means of appropriate radiation sources, focussed simultaneously on the object and represented visually by in themselves known stationary means and wherein the unmoved object is scanned in the shape of a raster in two directions each standing at a right angle to the other, characterised thereby, that for the direct visual representation, only radiation sources of one kind of radiation are moved for the scanning and that the beams of different kind are in a given case also focussed one after the other on the object.

2. Method according to claim 1, characterised thereby, that a light beam for the setting and following incident light examination as well as an acoustic beam are produced on the same side of the object for the successive examination of the same object detail, wherein the acoustic beam scans the object detail in two directions each standing at a right angle to the other.

3. Method according to claim 1, characterised thereby, that a light beam for the setting and following transmitted light examination as well as an acoustic beam are produced on mutually opposite sides of the object for the successive examination of the same object detail, wherein the acoustic beam scans the object detail in two directions each standing at a right angle to the other.

4. Method according to claim 1, characterised thereby, that two acoustic beams, by which the object is scanned and which are of different frequency, are produced one after the other on the same side of the object.

5. Method according to claim 1, characterised thereby, that a light beam and an acoustic beam are produced on mutually opposite sides of the object for the simultaneous examination of the same object detail, wherein the acoustic beam scans the object detail in two directions each standing at a right angle to the other.

6. Method according to claim 1, characterised thereby, that a laser beam and an acoustic beam are produced on mutually opposite sides of the object for the simultaneous examination of the same object detail, wherein the acoustic beam directly and the laser beam after reflection synchronous with the acoustic beam scan the object detail in two directions each standing at a right angle to the other.

7. Apparatus for the performance of several mutually augmenting optically and acoustically microscopic examinations at an object (25), with a turntable (14), which displays at least two mountings (15, 15′) for different microscopic examination devices and possesses detent settings, in which the pivoted-in examination devices each time assume the same position relative to an object mounting (12), characterised thereby, that a stand column (11) is fastened perpendicularly on a base plate (10) and carries the turntable (14), which is vertically displaceable and the plane of which is oriented parallely to the base plate (10) and the mountings (15, 15′) of which for optically and acoustically microscopic observation devices are arranged displaced through 90°, the observation axes (16, 16′) of which lie parallely and at the same spacing from the rotational axis (17) of the turntable (14), that the object mounting (12) is provided on the base palte (10) at a spacing from the same in the pivotal range of the observation axes (16, 16′) and the apparatus is constructed in such a manner that a direct optically microscopic observation is performable during the visible representation of the object (25) through scanning of the same by radiation sources of only one kind.

8. Apparatus according to clami 7, characterised thereby, that the stand column (11) consists of two U-shaped elements, between which a slide (13) is arranged, which is vertically movable through a coarse-fine adjustment, carries the turntable (14) and is connected with the U-shaped elements by means of an aforenamed rolling bearing (40).

9. Apparatus according to claim 8, characterised thereby, that the turntable (14) is rotatably borne in the slide (13) and is unlatchable out of a latched operative setting by means of quickaction adjustment together with the slide (13) and independently of the coarse-fine adjustment thereof.

10. Apparatus according to claim 7, characterised thereby, that a stand (26) with a vertically displaceable guide (27) for the fastening of at least one further microscopic examination device, which is associated with the underside of the object mounting (12), is mounted on the base plate (10).

11. Apparatus according to claim 10, characterised thereby, that at least one further equipment such as an illuminating equipment, a laser equipment (31), an acoustically microscopic equipment and an optically microscopic equipment (18') with the formation of an inverse optical microscope, is fastenable at the vertically displaceable guide (27).

12. Apparatus according to one or more of the claims 7 to 11, characterised thereby, that at least one further equipment such as an optically microscopic equipement (18), an illuminating equipment (29), a laser equipment and an acoustically microscopic equipment (19), wherein the latter is connected with a drive system for the linear scanning of the object (25), is insertable in the mountings (15, 15') of the turntable (14).

13. Apparatus according to one or more of the claims 8 to 12, characterised thereby, that a flange (41), which is firmly connected with the turntable (14), together with a bearing ring (48), connected secure against rotation with the same, after lifting out of a detent setting is rotatable about a central axis (61) on a support ring (49) on the slide (13) and that the bearing ring (48) in detent setting lies secure against rotation on a plate (51), which is provided with a vertical projection (54) for the height adjustment of a spindle (58), which extends co-axially to the central axis (61) and the upper end of which is supported at the support ring (50).

14. Apparatus according to claim 13, characterised thereby, that the projection (54) of the plate (51) is provided with an external thread (55), which carries a worm wheel (63) fastened rotatably in a bearing element (66) by means of a worm (64).

15. Apparatus according to one or more of the claims 7 to 14, characterised thereby, that for fine adjustment, a slide element (71), constructed in wedge shape, is horizontally displaceably guided between lower ball bearings (72) and upper ball bearings (70) fastened in the bearing element (66), wherein the lower ball bearings (72) are arranged on a plate (79), which is firmly connected with the base plate (10), and the bearing element (66) is held by one end of a leaf spring parallelogram (73), the other end of which is connected with a carrier (75) mounted on the base plate (10).

**Revendications**

1. Procédé pour l'exécution de plusieurs examens mutuellement complémentaires au microscope optique ou acoustique sur un objet, au moins deux rayons de type différent étant produits au moyen de sources de rayonnement correspondantes, focalisés simultanément sur l'objet et représentés de façon visible par des moyens fixes connus en soi et l'objet immobile étant exploré en forme de quadrillage dans deux directions à angle droit l'une par rapport à l'autre, caractérisé en ce que, pour la représentation visuelle directe, seules des sources de rayonnement d'un type de rayonnement sont déplacées pour l'exploration et en ce que les rayons de type différent sont éventuellement aussi focalisés l'un après l'autre sur l'objet.

2. Procédé selon la revendication 1, caractérisé en ce qu'un rayon lumineux, pour la mise au point et l'examen sous lumière incidente ainsi qu'un rayon acoustique sont produits sur le même côté de l'objet pour l'examen successif du même détail de l'objet, le rayon acoustique explorant le détail de l'objet dans deux directions mutuellement perpendiculaires.

3. Procédé selon la revendication 1, caractérisé en ce qu'un rayon lumineux, pour la mise au point et l'examen sous éclairage par transmission ainsi qu'un rayon acoustique sont produits sur des côtés mutuellement en regard de l'objet pour l'examen successif du même détail de l'objet, le rayon acoustique explorant le détail de l'objet dans deux directions mutuellement orthogonales.

4. Procédé selon la revendication 1, caractérisé en ce que deux rayons acoustiques de fréquence différente sont produits successivement sur le même côté de l'objet, par lesquels l'objet est exploré.

5. Procédé selon la revendication 1, caractérisé en ce qu'un rayon lumineux et un rayon acoustique sont produits sur des côtés mutuellement en regard de l'objet pour l'examen simultané du même détail de l'objet, le rayon acoustique explorant le détail de l'objet dans deux directions mutuellement perpendiculaires.

6. Procédé selon la revendication 1, caractérisé en ce qu'un rayon laser et un rayon acoustique sont produits sur des côtés mutuellement en regard de l'objet pour l'examen simultané du même détail de l'objet, le rayon acoustique explorant directement et le rayon laser explorant après réflexion synchroniquement avec le rayon acoustique le détail de l'objet dans deux directions mutuellement orthogonales.

7. Dispositif pour l'exécution de plusieurs examens mutuellement complémentaires au microscope optique et acoustique sur un objet (25), avec un plateau tournant (14) qui présente au moins deux logements (15, 15') pour différents appareils d'examen microscopiques et qui possède des positions d'arrêt dans lesquelles les axes d'observation (16, 16') des appareils d'examen insérés par pivotement occupent respectivement la même position par rapport à un support récepteur (12) de l'objet, caractérisé en ce que perpendiculairement à une plaque de base (10) est fixée une colonne de statif (11) qui porte le plateau tournant (14) qui est réglable en hauteur et dont le plan est orienté parallèlement à la plaque de base (10) et dont les logements (15, 15') pour des appareils d'examen de microscopie optique et acoustique sont disposés en étant décalés de 90°, dont les axes d'observation (16, 16') sont parallèles à l'axe de rotation (17) du plateau tournant (14) et à la même distance de cet axe, en ce que dans la plage de pivotement des axes d'observation (16, 16') sur la plaque de base (10) et à une certaine distance de cette dernière est prévu le support récepteur (12) de l'objet et le dispositif est conformé de telle façon que, pendant la représentation visible de l'objet (25) par exploration de celui-ci par des sources de rayonnement, d'un seul type, une observation microscopique optique directe peut être exécutée.

8. Dispositif selon la revendication 7, caractérisé en ce que la colonne de statif (11) se compose de deux éléments en forme de U entre lesquels est disposé un coulisseau (13) verticalement déplaçable par un réglage grossier-fin et portant le plateau tournant (14), lequel coulisseau est relié aux éléments en forme de U au moyen d'un roulement précité (40).

9. Dispositif selon la revendication 8, caractérisé en ce que le plateau rotatif (14) est monté tournant dans le coulisseau (13) et est déverrouillable ensemble avec le coulisseau (13) et indépendamment du réglage grossier-fin de celui-ci à partir d'une position verrouillée de fonctionnement au moyen d'un déplacement rapide.

10. Dispositif selon la revendication 7, caractérisé en ce que sur la plaque de base (10) est monté un montant (26) avec un guidage (27) déplaçable en hauteur pour la fixation d'au moins un autre appareil d'examen microscopique, qui est associé à la face de dessous du support récepteur d'objet (12).

11. Dispositif selon la revendication 10, caractérisé en ce qu'au guidage (27) déplaçable en hauteur peuvent être fixés au moins un autre dispositif tel qu'un système à laser (31) et un système de microscopie optique (18') avec constitution d'un microscope optique inversé.

12. Dispositif selon une ou plusieurs des revendications 7 à 11, caractérisé en ce que dans les logements (15, 15') du plateau rotatif (14) peuvent être insérés au moins un autre dispositif tel qu'un système de microscopie optique (18), un système d'éclairage (29) et un système de microscopie acoustique (19), ce dernier étant relié à un système d'entraînement pour l'exploration linéaire de l'objet (25).

13. Dispositif selon une ou plusieurs des revendications 8 à 12, caractérisé en ce que, sur le coulisseau (13), une bride (41), rigidement reliée au plateau tournant (14), peut, conjointement avec une bague d'appui (48) solidaire en rotation de cette bride, tourner sur une bague portante (49) autour d'un axe central (61) après soulèvement hors d'une position d'arrêt et en ce que la bague d'appui (48) repose, solidairement en rotation dans la position d'arrêt, sur un plateau (51) qui est pourvu d'un appendice vertical (54) pour le déplacement en hauteur d'une broche (58) s'étendant coaxialement à l'axe central (61) et dont l'extrémité supérieure contre la bague portante (50).

14. Dispositif selon la revendication 13, caractérisé en ce que l'appendice (54) du plateau (51) est pourvu d'un filetage extérieur (55) qui porte une roue dentée tangente (63) de vis sans fin fixée de façon tournante au moyen d'une vis sans fin (64) dans un élément formant palier (66).

15. Dispositif selon une ou plusieurs des revendications 7 à 14, caractérisé en ce que, pour le réglage fin, un élément formant coulisseau (71), réalisé en forme de coin, est guidé de façon horizontalement déplaçable entre des roulements à billes supérieurs (70) fixés dans l'élément formant palier (66) et des roulements à billes inférieurs (72), ces derniers étant montés sur une plaque (79) rigidement reliée à la plaque de base (10) et l'élément formant palier (66) étant maintenu par une extrémité d'un parallélogramme de ressorts à lames (73) dont l'autre extrémité est reliée à un support (75) monté sur la plaque de base (12).

Fig 1

Fig. 2

## Fig. 3

0 139 967

Fig. 4

Fig. 5

Fig.6